# EUROPEAN PATENT APPLICATION

(11) **EP 4 559 733 A1**
(43) Date of publication of application: **28.05.2025**
(21) Application number: 23846987.8
(22) Date of filing: 26.07.2023
(51) Int. Cl.: B60L 53/30, H04W 84/12, B60L 53/126, B60L 53/67

(54) **WIRELESS LAN-BASED CHARGING COMMUNICATION APPARATUS AND METHOD, FOR DYNAMIC WIRELESS POWER TRANSFER**

(30) Priority: 26.07.2022 KR 20220092344
(71) Applicant: Hyundai Motor Company, Seoul 06797 (KR); Kia Corporation, Seoul 06797 (KR)
(72) Inventor: SEONG, Jae Yong, Hwaseong-si, Gyeonggi-do 18280 (KR)
(74) Representative: Isarpatent
(86) International application number: PCT/KR2023/010803
(87) International publication number: WO 2024/025329

(57) **Abstract**

A charging communication method for charging an electric vehicle, comprises the steps of: performing a communication setup and a session setup for wireless power transfer between an SECC and an EVCC; performing a charging communication session for dynamic wireless power transfer (D-WPT) between the SECC and the EVCC; and performing a charging session by means of dynamic wireless power transfer between the SECC and the EVCC.

## Description

### TECHNICAL FIELD

The present disclosure relates to a charging communication technology for an electric vehicle (EV) and, more specifically, to a charging communication technology for a dynamic wireless power transfer (D-WPT) using a wireless local area network (WLAN) technology.

### BACKGROUND ART

The description in this section merely provides background information of embodiments of the present disclosure and is not intended to specify prior arts of the present disclosure.

An electric vehicle (EV) is driven by an electric motor by power stored in a battery, and produces less pollution such as exhaust gas and noise compared with a conventional gasoline engine vehicle, and have advantages of fewer faults, a longer life span, and simplified driving operations.

The EVs may be classified into hybrid electric vehicles (HEVs), plug-in hybrid electric vehicles (PHEVs), and electric vehicles (EVs) based on a driving power source. The HEV has an engine as a main power source and a motor as an auxiliary power source. The PHEV has a motor and a battery as a main power source and an engine that is used when the battery is discharged. The EV has a motor but does not have an engine.

An electric vehicle charging system may be defined as a system that charges the battery mounted on the electric vehicle using electric power obtained from a commercial power grid or stored in an energy storage device. Such an electric vehicle charging system may have various forms depending on a type of the electric vehicle. For example, the electric vehicle charging system may include a conductive charging system using a cable or a non-contact wireless power transfer system.

During a charging session, a reception pad of a vehicle assembly (VA) mounted on the electric vehicle may form an inductive resonance coupling with a transmission pad of a ground assembly (GA) installed at a charging station or a charging spot and may charge the battery of the EV using electric power transferred from the ground assembly through the inductive resonance coupling.

When an electric vehicle is to be charged, a robot arm or manipulator may be used to supply power from an electric vehicle supply equipment (EVSE) to a charging inlet or charging port at a charging door of the electric vehicle.

In such a case, it may be required to define a procedure for a positioning between the electric vehicle and the manipulator and additional preparatory operations for the power supply in considerations of a variety of types of the charging inlets in the electric vehicle, a variety of types of the electric vehicle supply equipment, and a variety of charging methods.

A message sequence between the power grid and the EV is defined in advance between a supply equipment communication controller (SECC) located on a grid side and an electric vehicle communication controller (EVCC) mounted on the EV, and is realized by an exchange of a message pair of a request messages and response messages.

Typically, the EV is supplied with the electric power to charge its battery by a charging method using an automatic coupling device, a wireless power transfer, or an AC charging, or DC charging. To charge the battery, the EV exchanges messages with the SECC related to a session setup, a vehicle positioning setup, a vehicle positioning, a pairing, an authentication and authorization setup, an authentication and authorization, a service discovery, service details, and a service selection.

If the EV fails to find a compatible method for a positioning or a pairing for the charging using the automatic coupling device or the wireless power transfer after receiving a vehicle positioning setup response message, the EV may move from a session stop state to a service discovery state through a service renegotiation, for example.

A static wireless power transfer (S-WPT) system is entering a commercialization stage, and recently, an introduction of a dynamic wireless power transfer (D-WPT) system has also been discussed. However, any protocol for a message sequencing between the electric vehicle and the grid for the D-WPT and rules for message parameters for the D-WPT have not been established yet in related standards such as the ISO 15118 standard, and there is no technology proposed to solve this problem.

### DISCLOSURE OF INVENTION

### TECHNICAL PROBLEM

To solve the above problem, one object of the present disclosure is to provide a charging communication method and device for a dynamic wireless power transfer (D-WPT) using a wireless local area network (WLAN).

Another object of the present disclosure is to provide new vendor specific element (VSE) additional information parameters representing the D-WPT and entities belonging to the D-WPT.

Another object of the present disclosure is to provide a charging procedure and use cases using the WLAN when charging an electric vehicle by the D-WPT.

Another object of the present disclosure is to propose defining information to be exchanged between a D-WPT device and the electric vehicle when the D-WPT device and the electric vehicle performs communications through the WLAN for charging the electric vehicle.

### TECHNICAL SOLUTION

According to an aspect of an exemplary embodiment, a charging communication method may be performed between a supply equipment communication controller (SECC) associated with a primary assembly configured to transmit electric power to an electric vehicle and an electric vehicle communication controller (EVCC) associated with a secondary assembly mounted on the electric vehicle and configured to receive the electric power from the primary assembly.

The charging communication method may include: performing a communication setup and a session setup for a wireless power transfer between the EVCC and at least one SECC; performing a charging communication session for a dynamic wireless power transfer (D-WPT) between the EVCC and the at least one SECC; and performing a charging session by the dynamic wireless power transfer between the EVCC and the at least one SECC.

The communication setup and the session setup for the wireless power transfer may be performed between the EVCC and the at least one SECC capable of communicating with the EVCC via a wireless LAN (WLAN).

The operation of performing the charging communication session for the dynamic wireless power transfer may include: determining, by at least one of the EVCC and/or a first SECC from among the at least one SECC capable of communicating with the EVCC via the WLAN, whether the first SECC capable of communicating with the EVCC via the WLAN is installed on a D-WPT road and capable of providing a D-WPT service.

The charging communication method may further include: stopping the charging session based on a state of charge (SOC) of the electric vehicle reaching a predetermined reference value through the dynamic wireless power transfer between the EVCC and the at least one SECC.

The charging communication method may further include: stopping the charging session and entering a standby state based on a determination of the electric vehicle changing lanes from a first lane on a D-WPT road to a second lane on a non-D-WPT road. The changing lanes may be determined by at least one of the EVCC and/or a first SECC associated with the first lane
The charging communication method may further include: stopping the charging communication session and terminating a communication between the EVCC and the first SECC based on a determination of the electric vehicle moving out of a WLAN rage, in the standby state. The moving out of the WLAN range may be determined by at least one of the EVCC and/or the first SECC

The charging communication method may further include: performing again the session setup between the EVCC and the first SECC on the D-WPT road to which the electric vehicle returned based on a determination of the electric vehicle returning to the first lane on the D-WPT road, in the standby state. The returning to the first lane on the D-WPT road may be determined by at least one of the EVCC and/or the first SECC.

In performing the charging communication session, a compatibility check and a parameter exchange may be performed based on a determination of the electric vehicle changing lanes from a first lane on a D-WPT road to a second lane on the D-WPT road providing a same service. The changing of lanes may be determined by at least one of the EVCC and/or the at least one SECC, based on results of a positioning and a pairing.

In performing the charging communication session, a service discovery and a service selection may be performed again based on a determination of the electric vehicle changing lanes from a first lane associated with a first SECC on a first D-WPT road to a second lane on a second D-WPT road providing a different service from the first SECC. The changing of lanes may be determined by at least one of the EVCC, the first SECC, and/or the second SECC, based on results of a positioning and a pairing.

The charging communication method may further include: stopping the charging session and performing again the communication setup and the session setup for the wireless power transfer between the EVCC and a second SECC related to a second lane based on a determination of the electric vehicle changing lanes from a first lane associated with a first SECC on a first D-WPT road to the second lane on a second D-WPT road providing a different service from the first SECC requiring a new compatibility check or a new parameter exchange. The changing of lanes may be determined by at least one of the EVCC, the first SECC, and/or the second SECC.

The charging communication method may further include: stopping the charging session and performing a pairing process between the EVCC and a third SECC on the parking spot through a WLAN based on a determination of the electric vehicle entering the parking spot providing a static wireless power transfer (S-WPT) from a lane on the D-WPT road; and performing a session setup between the EVCC and the third SECC on the parking spot after the pairing process.

The operation of performing a charging communication session for the D-WPT between the EVCC and the at least one SECC may include: determining a D-WPT service supported by the at least one SECC indicated based on a message including D-WPT information as additional information that is a part of a vendor specific element (VSE) in a frame body.

According to an aspect of an exemplary embodiment, an electric vehicle communication controller (EVCC) mounted on an electric vehicle and associated with a secondary assembly suitable for receiving electric power from a primary assembly includes: a processor configured to receive at least one instruction from a memory and execute the at least one instruction. The processor may be configured, by executing the at least one instruction, to: perform a communication setup and a session setup for a wireless power transfer with at least one SECC; perform a charging communication session for a dynamic wireless power transfer (D-WPT) between the EVCC and the at least one SECC; and perform a charging session by the dynamic wireless power transfer between the EVCC and the at least one SECC.

The processor may be further configured, by executing the at least one instruction, to: perform the communication setup and the session setup for the wireless power transfer between the EVCC and the at least one SECC capable of communicating with the EVCC via a wireless LAN (WLAN).

The processor may be further configured, by executing the at least one instruction, to: determine, between the EVCC and a first SECC from among the at least one SECC capable of communicating with the EVCC via the WLAN, whether the first SECC capable of communicating with the EVCC via the WLAN is installed on a D-WPT road and capable of providing a D-WPT service.

The processor may be further configured, by executing the at least one instruction, to: stop the charging session and enter a standby state based on a determination of the electric vehicle changing lanes from at least one first lane on a D-WPT road to a second lane on a non-D-WPT road.

The processor may be further configured, by executing the at least one instruction, to: perform again the session setup between the EVCC and a first SECC on the D-WPT road to which the electric vehicle returned based on a determination of the electric vehicle returning to the D-WPT road, in the standby state. The returning to the D-WPT road may be determined by at least one of the EVCC and/or the first SECC.

The processor may be further configured, by executing the at least one instruction, to: determine whether a second lane provide a same service as a first lane and whether the second lane has a same compatibility level as the first lane based on a determination of the electric vehicle changing lanes from the first lane on a D-WPT road to the second lane on the D-WPT road, based on results of a positioning and a pairing.

The processor may be further configured, by executing the at least one instruction, to: perform at least one of (a1) a session setup, (a2) a service discovery and selection, and/or (a3) a parameter exchange with the at least one SECC associated with a second lane based on (b1) whether the second lane provides a same service as a first lane and/or (b2) whether the second lane has a same compatibility level as the first lane based on a determination of the electric vehicle changing lanes from the first lane to the second lane.

The processor may be further configured, by executing the at least one instruction, to: determine a D-WPT service supported by the at least one SECC indicated based on a message including D-WPT information as additional information that is a part of a vendor specific element (VSE) in a frame body.

### ADVANTAGEOUS EFFECTS

An exemplary embodiment of the present disclosure enables to provide a charging communication method and device for the dynamic wireless power transfer (D-WPT) using the wireless local area network (WLAN).

An exemplary embodiment of the present disclosure enables to provide new vendor specific element (VSE) additional information parameters representing the D-WPT and entities belonging to the D-WPT.

An exemplary embodiment of the present disclosure provides a charging procedure and use cases using the WLAN when charging an electric vehicle by the D-WPT.

An exemplary embodiment of the present disclosure enables to define information to be exchanged between the D-WPT device and the electric vehicle when the D-WPT device and the electric vehicle performs communications through the WLAN for charging the electric vehicle.

### DESCRIPTION OF DRAWINGS

FIG. 1 is a conceptual diagram illustrating a charging infrastructure for charging electric vehicles by a dynamic wireless power transfer (D-WPT) using parallel lines according to an exemplary embodiment of the present disclosure;
FIG. 2 is a conceptual diagram illustrating a charging infrastructure for charging electric vehicles by the dynamic wireless power transfer (D-WPT) using segmented parallel lines according to an exemplary embodiment of the present disclosure;
FIG. 3 is a conceptual diagram illustrating a charging infrastructure for charging electric vehicles by the dynamic wireless power transfer (D-WPT) using segmented coils according to an exemplary embodiment of the present disclosure;
FIG. 4 is a flowchart illustrating a process of performing a communication setup, a charging communication session, and a charging session for the D-WPT according to an exemplary embodiment of the present disclosure;
FIG. 5 is a flowchart illustrating a process of performing the charging communication session shown in FIG. 4 in detail;
FIG. 6 is a flowchart illustrating a process of performing the charging session shown in FIG. 4 in detail;
FIG. 7 is a conceptual diagram illustrating a use case according to an exemplary embodiment of the present disclosure, in which an electric vehicle starting from a parking spot drives on the D-WPT road without changing lanes and then reaches the parking spot;
FIG. 8 is a conceptual diagram illustrating a protocol for a termination of a charging in the use case of FIG. 7;
FIG. 9 is a conceptual diagram illustrating use cases according to exemplary embodiments of the present disclosure, in which an electric vehicle changes lanes or is getting out of a range of the WLAN on the D-WPT road;
FIG. 10 is a conceptual diagram illustrating a protocol performed in the use cases of FIG. 9 where the electric vehicle changes lanes and/or is getting out of a range of the WLAN;
FIG. 11 is a conceptual diagram illustrating a use case according to an exemplary embodiment of the present disclosure, in which an electric vehicle having driven on the D-WPT road reaches a parking spot supporting an S-WPT service compatible with the D-WPT;
FIG. 12 is a conceptual diagram illustrating a protocol performed when the electric vehicle reaches the parking spot in the use case of FIG. 11;
FIG. 13 is a conceptual diagram illustrating a MAC header and a frame body in a message that may be employed in the charging communication process for a D-WPT service according to an exemplary embodiment of the present disclosure;
FIGS. 14-18 are conceptual diagrams illustrating frame bodies and VSEs in the messages that may be employed in the charging communication process for the D-WPT service according to embodiments of the present disclosure;
FIGS. 19 and 20 are conceptual diagrams illustrating the VSEs and additional information within the VSEs in the messages that may be employed in the charging communication process for the D-WPT service according to an exemplary embodiment of the present disclosure;
FIGS. 21 and 22 are conceptual diagrams illustrating the additional information within the VSE in the message that may be employed in the charging communication process for the D-WPT service according to an exemplary embodiment of the present disclosure;
FIG. 23 is a conceptual diagram illustrating a proposed change to a service discovery protocol (SDP) request message that may be employed in the charging communication process for the D-WPT service according to an exemplary embodiment of the present disclosure;
FIG. 24 is a conceptual diagram illustrating a message structure including the VSE that may be employed in the charging communication process for the D-WPT service according to an exemplary embodiment of the present disclosure;
FIG. 25 is a block diagram of a charging communication device for the D-WPT according to an exemplary embodiment of the present disclosure and illustrates a physical configuration of an internal structure of a computing system suitable for implementing a generalized SECC and/or EVCC.

### BEST MODE

In addition to the above objects, another objects and features of the present disclosure will become more apparent through the description of exemplary embodiments with reference to the accompanying drawings.

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

For example, conventional technologies known to public before the filing of the present disclosure may be utilized in performing a setup, an association, a pairing, a localization, a positioning, and a docking/undocking control before charging an electric vehicle or in transmitting or receiving information required to perform the processes by applying mobile communication technologies such as Wi-Fi or 5G in a single-layer. At least some of the conventional technologies may be applied as a base technology for implementing the present disclosure.

However, the present disclosure is not intended to claim rights to these known technologies, and some of the conventional technologies may be included in the description of exemplary embodiments to enable to those skilled in the art to implement the exemplary embodiments without deviating from a scope of a technical concept of the exemplary embodiments.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted on the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted on the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

"Smart grid": A system implemented in which power plants, power generation units, and energy storage systems are connected in an intelligent manner through network facilities so as to exchange messages based on information and communication technologies.

"Charging station": A facility including one or more EVSEs, smart meters, and other technical equipment required to charge an EV.

"Electric Vehicle Supply Equipment (EVSE)": A device forming a part of the charging station that supplies energy to the electric vehicle via an outlet and being connected to a smart meter to measure an amount of transferred energy.

"Charge Point Operator (CPO)": A company or organization having an authority over the location of the charging station to allow a physical access to the charging station; or a communication node or entity managing the charging station and authorizing and controlling a charging process that takes place at each individual EVSE using information and communication technologies.

"Mobility Operator (MO)": A legal entity establishing a contractual relationship with an end user or a business entity as a legal basis for an authorization and a payment for the charging at the charging station.

E-Mobility Provider (EMP), E-Mobility Service Provider (EMSP), and Mobility Service Provider (MSP) may be used with similar meanings to the mobility operator.

"Plug-and-Charge (PnC)": A process in which the authentication, authorization, load control, and payment are automatically performed without any additional user interaction when a user simply plugs the electric vehicle into the EVSE. Alternatively, the PnC may refer to an identification and authorization mode for such an automatic process. The PnC may be performed by applying X.509 certificates and transmitting and verifying a signature.

"Public Key Infrastructure (PKI)": A system for creating, storing, redistributing, and revoking digital signatures that are used to verify that a specific public key belongs to a specific person or entity.

"External Identification Means (EIM)": Any external means by which a driver can authenticate and authorize himself or herself for a charging session at the charging station. Examples include a cash payment, a prepaid card, a credit card, a debit card, an NFC, a RFID, and an SMS. The EIM may form two typical authentication modes together with the PnC.

"Sales tariff": A function of providing price-related information over time. The sales tariff may refer to an input provided by the mobility operator to enable the EVCC side to calculate a charging schedule based on the sales tariff. The sales tariff may be a concept intended to provide incentives to electric vehicles that charge within a specific time slot for a preferred amount of electricity. A use case related to the sales tariff may be information on the electricity price provided by the mobility operator that authenticates the charging session based on a valid contract, in which case the contract may be authenticated by the driver or a car sharing operator to which the vehicle belongs by a contract certificate installed in the electric vehicle.

Additionally, the term "sales tariff" used herein may refer to a concept intended to encourage the use of renewable energy such as electric energy acquired by solar panels or wind turbines by providing incentives to electric vehicles charged during predictable time slots by the renewable energy. In some cases, the sales tariff may include not only the information on the electricity price but also the time slot associated with the price information.

"Secondary actor": An entity other than the EVCC or the SECC involved in the charging process. The secondary actor may be involved in the charging process by providing information related to the charging process. Examples of the secondary actor may include a charge point operator (CPO) and the mobility operator (MO).

"E-Mobility Account Identifier (EMAID)": A single contractual certificate issued for each legal contract concluded between the mobility operator and a customer for the electric vehicle charging. The EMAID may allow personal data to be pseudonymized and may be valid only for a limited time, e.g., the lifetime of the legal contract. Unlike the Vehicle Identification Number (VIN), the EMAID may not allow for a long-term evaluation of customer or vehicle data. The EMAID may be used as a temporary identifier that may be assigned using different authentication media for each temporary or short-term contract concluded for a family vehicle or a shared vehicle. A person may have a separate EMAID for each of several contracts with which the person is involved, so that the EMAIDs may be used for purposes other than personal identification information.

A term "vehicle-to-grid (V2G) communication" used herein is regulated in the ISO 15118 standard and can be designed to correspond to the Open Systems Interconnection (OSI) 7 layers. The OSI may be 'a conceptual model for standardizing communication functions of a communication or computing system regardless of an internal structure and technology involved.'

The ISO 15118 standard is characterized in that it is intended to establish and implement the charging and payment process for the electric vehicle and may adopt and utilize various information and communication technologies for this objective. Since the objective of the ISO 15118 standard is to establish the charging and payment process for the electric vehicle although the standard is related to the information and communication technology elements mapped to the OSI 7 layers, the special features of the application may be primarily addressed.

The V2G communication interface specified in the ISO 15118 standard may include digital, IP-based protocols. The communications between the EV and the EVSE and the communications between the EVCC and the SECC may be included in the V2G communication interface specified in the ISO 15118 standard.

"Vendor specific element (VSE)" may refer to a data format that contains information on a type of an EVSE available at a current location in ISO 15118-based communications.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

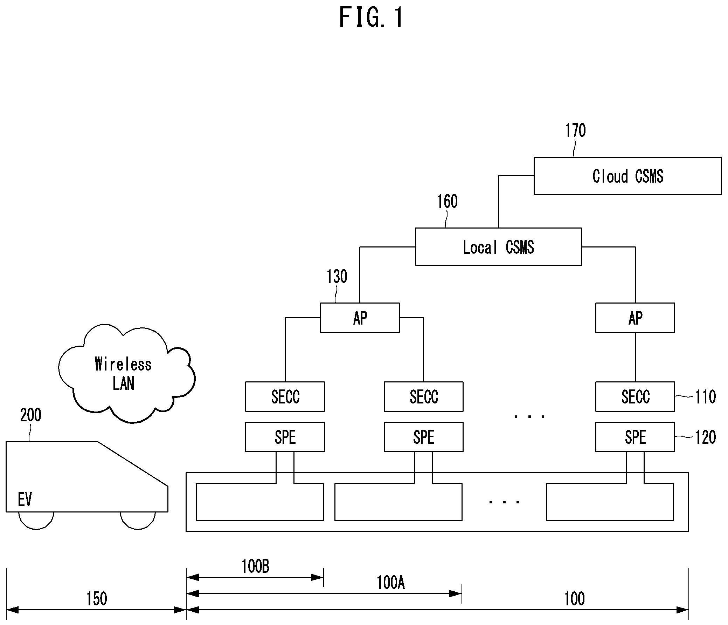

Hereinbelow, exemplary embodiments of the present disclosure are described in detail with reference to FIGS. 1-25.

FIG. 1 is a conceptual diagram illustrating a charging infrastructure for charging electric vehicles by a dynamic wireless power transfer (D-WPT) using parallel lines according to an exemplary embodiment of the present disclosure.

Referring to FIG. 1, a D-WPT road 100 capable of providing a D-WPT service to an electric vehicle 200 includes a plurality of parallel lines 100B. Each of the parallel lines 100B illustrated in FIG. 1, which is an element of the D-WPT road 100 buried in or arranged/installed on a section of the D-WPT road 100, may be an infrastructure component capable of wirelessly transmitting electric power to the electric vehicle 200 in the section of the D-WPT road 100.

A range of the WLAN 100A may typically be less than 100 meters (m). Referring to FIG. 1, a length of each parallel line 100B can be set to 50 m or smaller. Each parallel line 100B within the range of the WLAN 100A may be connected to a corresponding supply power electronics (SPE) 120 to receive the electric power, and a supply equipment communication controller (SECC) 110 in charge of the SPE 120 may communicate with an electric vehicle communication controller (EVCC) in the electric vehicle 200 for the power transfer between the SPE 120 and the electric vehicle 200. In the exemplary embodiment shown in FIG. 1, an access point AP 130 may be disposed in within the range of the WLAN 100A, and one SPE 120 and one SECC 110 may be arranged for each parallel line 100B.

In order to implement the D-WPT road or D-WPT supply device 100 all along the road, multiple APs may be deployed and multiple SECC Discovery Protocols (SDPs) may be assigned to each AP 130 as shown in FIG. 1. The SDPs may be assigned to respective SECCs 110, for example.

In an alternative embodiment, however, the parallel line 100B may be implemented to be longer than 50 m. In such a case, multiple APs may be deployed and one SDP may be assigned to each AP 130 so as to enable to implement the D-WPT road or device 100 all along the road.

The electric vehicle 200 may communicate with the SECC 110 via the WLAN, e.g., Wi-Fi. When the electric vehicle 200 enters the D-WPT road 100 from a normal road 150, the D-WPT service may be initiated based on communications and a pairing between the electric vehicle 200 and the SECC 110.

The D-WPT infrastructure may be connected to the multiple APs 130, and a security of the D-WPT infrastructure may be managed by a local cyber security management system (CSMS) 160 in charge of the multiple APs 130 and a cloud CSMS 170. Communications between the Local CSMS 160 and the cloud CSMS 170 may be implemented using cellular vehicle-to-everything (C-V2X) schemes.

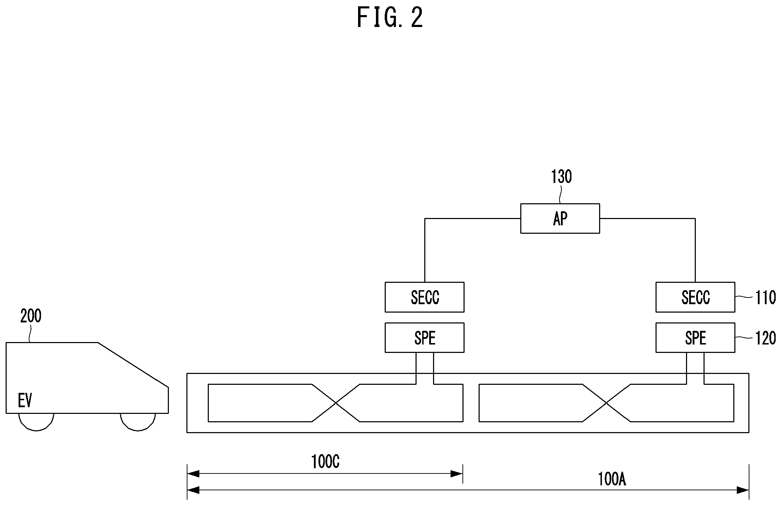

FIG. 2 is a conceptual diagram illustrating a charging infrastructure for charging electric vehicles by the dynamic wireless power transfer (D-WPT) using segmented parallel lines according to an exemplary embodiment of the present disclosure.

A D-WPT infrastructure employing the segmented parallel lines 100C is illustrated in FIG. 2. Each segmented parallel line 100B illustrated in FIG. 2, which is an element of the D-WPT road 100, may be an infrastructure component capable of wirelessly transmitting the electric power to the electric vehicle 200 in a section of the D-WPT road 100.

Referring to FIG. 2, the length of the segmented parallel line 100C may be set to 50 m or smaller. Each segmented parallel line 100C within the range of the WLAN 100A may be connected to a corresponding one of the SPEs 120 to receive the electric power and may interact with the electric vehicle 200 through the communications of the SECC 110. In the exemplary embodiment shown in FIG. 2, a single access point AP 130 may be disposed in the range of the WLAN 100A, and one SPE 120 and one SECC 110 may be arranged for each segmented parallel line 100B.

In order to implement the D-WPT road or D-WPT supply device 100 all along the road, multiple APs may be deployed and multiple SECC Discovery Protocols (SDPs) may be assigned to each AP 130 as shown in FIG. 2. The SDPs may be assigned to respective SECCs 110, for example.

In an alternative embodiment, however, the segmented parallel line 100B may be implemented to be longer than 50 m. In such a case, multiple APs may be deployed and one SDP may be assigned to each AP 130 to enable to implement the D-WPT road or device 100 all along the road.

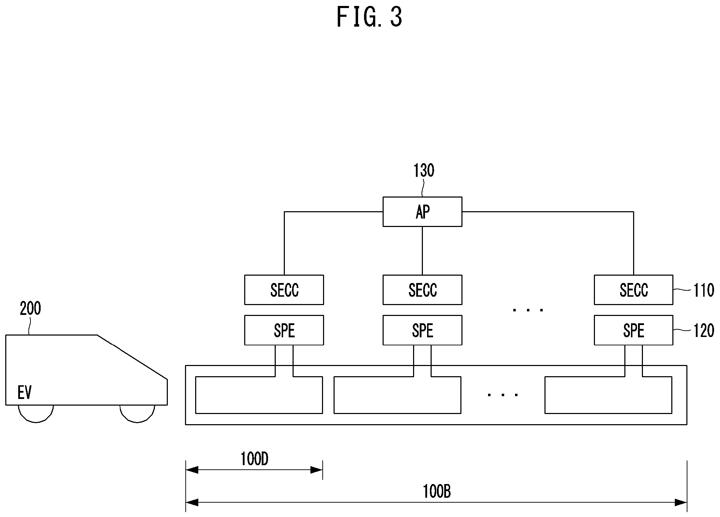

FIG. 3 is a conceptual diagram illustrating a charging infrastructure for charging electric vehicles by the dynamic wireless power transfer (D-WPT) using segmented coils according to an exemplary embodiment of the present disclosure.

A segmented coil 100D illustrated in FIG. 3 may be a sub-component of the D-WPT infrastructure that supplies the electric power to the electric vehicle 200 entering a certain area. Since a length of each section of the segmented coil 100D is generally smaller than the range of the WLAN 100A, multiple APs may be deployed and multiple SECC Discovery Protocols (SDPs) may be assigned to each AP 130 in order to implement the D-WPT road or device 100 all along the road.

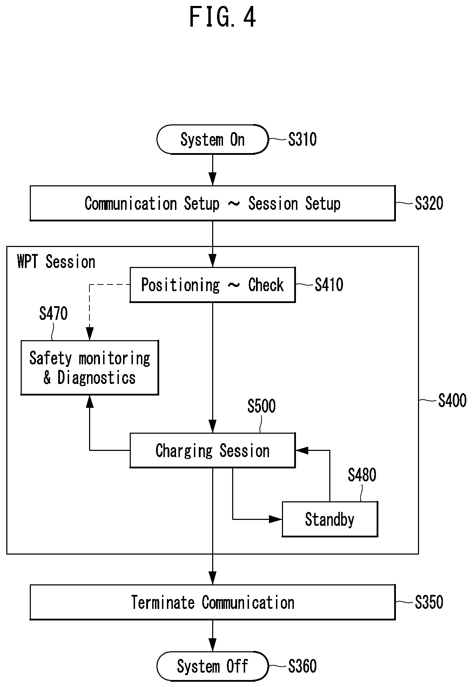

FIG. 4 is a flowchart illustrating a process of performing a communication setup, a charging communication session, and a charging session for the D-WPT according to an exemplary embodiment of the present disclosure.

In the description below, all the steps performed between the EVCC and at least one SECC may be performed by logical operations of at least one of the EVCC and/or the at least one SECC or by a cooperation of the EVCC and the at least one SECC. The localization between the electric vehicle 200 and the D-WPT infrastructure, the positioning of the electric vehicle 200, and a determination of whether the electric vehicles 200 is outside the range of the D-WPT infrastructure, and so on may be performed by the EVCC and/or the at least one SECC, and results of the measurement, recognition, or determination may be shared by the EVCC and/or the at least one SECC.

Referring to FIG. 4, a charging communication method for electric vehicle charging according to an exemplary embodiment of the present disclosure may include operations of performing the communication setup and session setup for the wireless power transfer between the at least one SECC and the EVCC (S320); performing the charging communication session for the dynamic wireless power transfer (D-WPT) between the at least one SECC and the EVCC (S400, S410); and performing the charging session by the dynamic wireless power transfer between the at least one SECC and the EVCC (S500).

In the operation of performing the communication setup and session setup (S320), the communication setup and the session setup for the wireless power transfer may be performed between the EVCC and the at least one SECC capable of communicating with the EVCC via the wireless LAN (WLAN).

The operation of performing the charging communication session for the dynamic wireless power transfer (S400, S410) may include an operation of determining (identifying or detecting), between the EVCC and a first SECC from among the at least one SECC capable of communicating with the EVCC via the WLAN, whether the first SECC capable of communicating with the EVCC via the WLAN is a SECC installed on the D-WPT road and capable of providing the D-WPT service.

When the system including the SECC and the EVCC is turned on (S310), the communication setup and session setup operation between the at least one SECC and the EVCC may be performed (S320).

The charging communication session S400 performed between the at least one SECC and the EVCC may include a positioning and positioning check operation S410. The operation S410 may optionally activate a safety monitoring and diagnostics operation S470. The operation S470 may be activated when the charging session S500 is performed.

If a certain condition is satisfied during the charging session S500, the process may proceed to a standby state S480. When a certain condition is satisfied in the standby state S480, the process may return to the charging session S500.

When the charging session S500 is completed, the communication between the at least one SECC and the EVCC may be terminated (S350). Afterwards, the system including the at least one SECC and the EVCC may be turned off (S360).

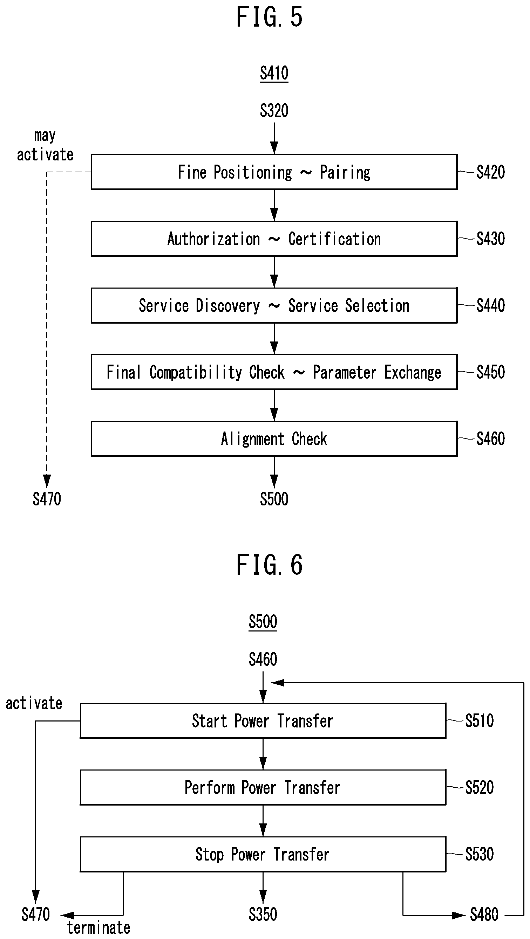

FIG. 5 is a flowchart illustrating, in detail, a process of performing the charging communication session shown in FIG. 4 according to an exemplary embodiment of the present disclosure.

Referring to FIG. 5, the operation S410 may include a fine positioning and pairing operation S420 performed after the operation S320. Depending on a result of the operation S420, the safety monitoring and diagnostics operation S470 may optionally be activated.

After the operation S420, an authorization and certification operation S430 may be performed.

After the operation S430, a service discovery and service selection operation S440 may be performed.

After the operation S440, a final compatibility check and parameter exchange operation S450 may be performed.

After the operation S450, an alignment check operation S460 may be performed.

After the operation S460, the charging session S500 may be performed.

FIG. 6 is a flowchart illustrating a process of performing the charging session shown in FIG. 4 in detail.

Referring to FIG. 6, the charging session S500 may include a power transfer start operation S510, a power transfer performing operation S520, and a power transfer stop operation S530. The power transfer start operation S510 may be performed after the alignment check operation S460 and may activate the safety monitoring and diagnostics operation S470. Meanwhile, the power transfer stop operation S530 may terminate the safety monitoring and diagnostics operation S470.

If a certain condition is satisfied after the power transfer stop operation S530, an operation of terminating the communication connection may be performed (S350). If a certain condition is satisfied (e.g., a target charging amount or a target state of charge (SoC) is achieved) after the power transfer stop operation S530, the process may proceed to the standby state S480. Afterwards, when a certain condition is satisfied (e.g., the state of charge or a charging ratio falls below a reference value) in the standby state S480, the process may return to the power transfer start operation S510.

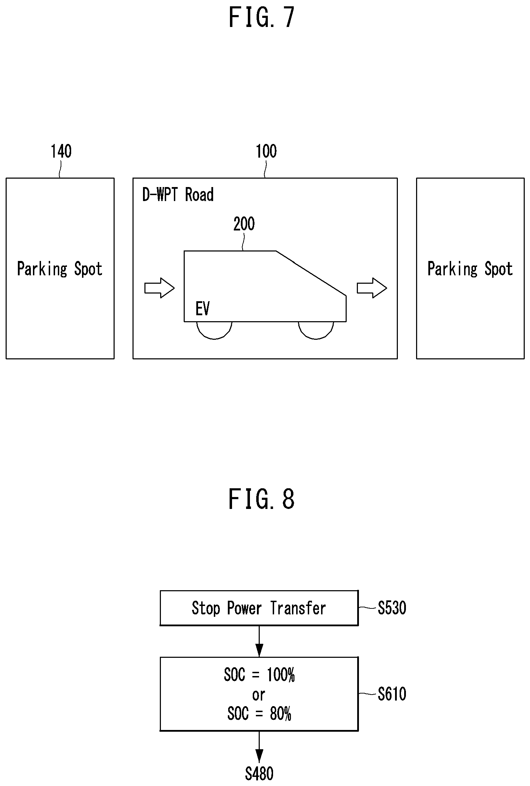

FIG. 7 is a conceptual diagram illustrating a use case according to an exemplary embodiment of the present disclosure, in which an electric vehicle starting from a parking spot drives on the D-WPT road without changing lanes and then reaches the parking spot.

Referring to FIG. 7, the electric vehicle 200 leaves a parking spot and is charged while driving on the D-WPT road 100 without changing lanes on the D-WPT road 100, and may reach the parking spot 140.

FIG. 8 is a conceptual diagram illustrating a protocol for a termination of the charging in the use case of FIG. 7.

Referring to FIG. 8, a charging communication method for electric vehicle charging according to an exemplary embodiment of the present disclosure may further include an operation of terminating the charging session (S480) when the state of charge (SOC) of the electric vehicle reaches a predetermined reference value (S610) through the D-WPT between the SECC and the EVCC.

The value of the target state of charge, i.e., 80% or 100%, is just an example in an exemplary embodiment of the present disclosure, and the present disclosure is not limited thereto.

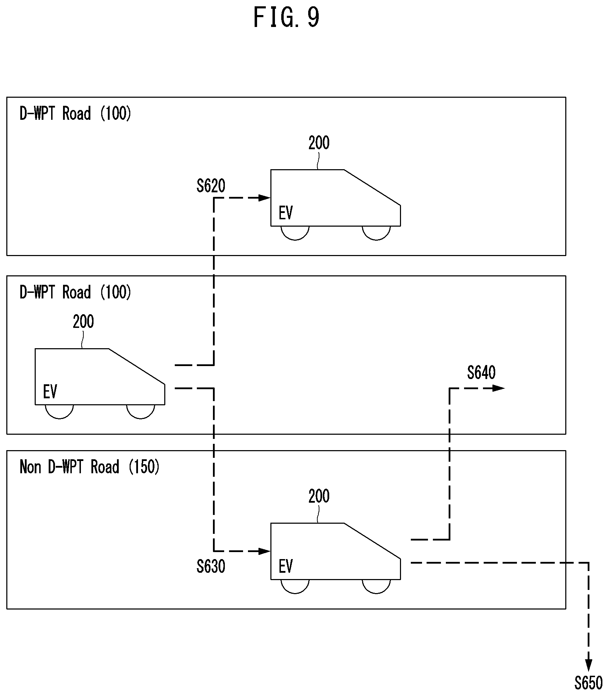

FIG. 9 is a conceptual diagram illustrating use cases according to exemplary embodiments of the present disclosure, in which an electric vehicle changes lanes or is getting out of a range of the WLAN on the D-WPT road.

First, FIG. 9 shows a use case (S620) where the electric vehicle driving on the D-WPT road 100 changes lanes to another lane on the D-WPT road 100. As described in detail below, the protocols performed in the conceptual use case S620 may differ depending on whether the lanes before and after the lane change within the D-WPT road 100 allow the same service as each other and/or provide a compatibility (for example, please refer to S620, S630, S640, or S650).

In addition, FIG. 9 shows another use case (S630) where the electric vehicle changing lanes from the D-WPT road 100 to a non-D-WPT road 150, i.e., a normal road.

An example that the electric vehicle changes the lane back to a lane on the D-WPT road 100 after the lane change from the D-WPT road 100 to the non-D-WPT road 150 is indicated by a use case (S640).

An example that the electric vehicle is getting out of the range of the WLAN after the lane change from the D-WPT road 100 to the non-D-WPT road 150 is indicated by a use case (S650).

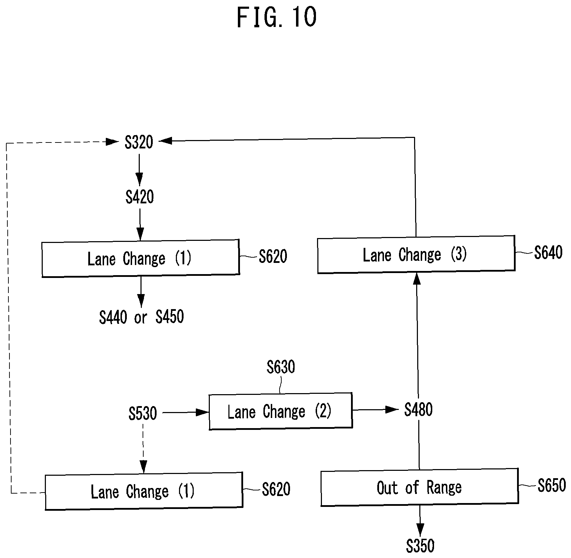

FIG. 10 is a conceptual diagram illustrating a protocol performed in the use cases of FIG. 9 where the electric vehicle changes lanes and/or is getting out of a range of the WLAN.

Referring to FIG. 10, a charging communication method for electric vehicle charging according to an exemplary embodiment of the present disclosure may further include a protocol for stopping the power transfer (S530) and proceeding to the standby state (S480) when at least one of the at least one SECC and the EVCC determines (identifies or detects) an event S630 that the electric vehicle changed lanes from a lane on a D-WPT road to a non-D-WPT road.

The charging communication method for electric vehicle charging according to an exemplary embodiment of the present disclosure may further include a protocol for proceeding to an operation of stopping the charging communication session and terminating communication (S350) when at least one of the at least one SECC (for example, at least one SECC associated with a lane before lane changing S630 and/or S650) and/or the EVCC determines (identifies or detects), in the standby state S480, an out-of-range event S650, i.e., an event that the electric vehicle moved out of the range of the WLAN.

According to the charging communication method for electric vehicle charging in accordance with an exemplary embodiment of the present disclosure, when at least one of the at least one SECC (for example, at least one SECC associated with a lane before S630 and/or a lane after returning S650) and/or the EVCC determines (identifies or detects), in the standby state S480, an event S640 that the electric vehicle returned to a lane on the D-WPT road, the session setup operation S320 between the EVCC and the at least one SECC associated with a lane after returning S650 on the D-WPT road to which the electric vehicle returned may be performed again.

In the operation of performing the charging communication session, the compatibility check and parameter exchange operation S450 may be performed again when at least one of the at least one SECC (for example, associated with a second lane after lane changing S620) and/or the EVCC determines (identifies or detects), based on the results of the positioning and the pairing, an event S620 that the electric vehicle changed lanes from a first lane on the D-WPT road to the second lane on the D-WPT road providing the same service as that available in the previous first lane.

In the operation of performing the charging communication session, the service discovery and service selection operation S440 may be performed again when at least one of the at least one SECC (for example, associated with a second lane after lane changing S620) and/or the EVCC determines (identifies or detects), based on the results of the positioning and the pairing, an event S620 that the electric vehicle changed lanes from a first lane on the D-WPT road to the second lane on the D-WPT road providing a service different from the service available in the previous first lane. For example, a situation can be considered in that a first service provider or a first service protocol associated with the first lane/first SECC is different from a second service provider or a second service protocol associated with the second lane/second SECC.

According to the charging communication method for electric vehicle charging in accordance with an exemplary embodiment of the present disclosure, when at least one of the at least one SECC (for example, associated with a second lane after lane changing S620) and/or the EVCC determines (identifies or detects) an event S620 that the electric vehicle changed lanes from a first lane on the D-WPT road to the second lane on the D-WPT road providing the service different from the service available in the previous first lane requiring a new compatibility check or a new parameter exchange S450, the communication setup and session setup operation S320 for the wireless power transfer may be performed again between the EVCC and a second SECC on the second lane in the state that the charging session is stopped (S530).

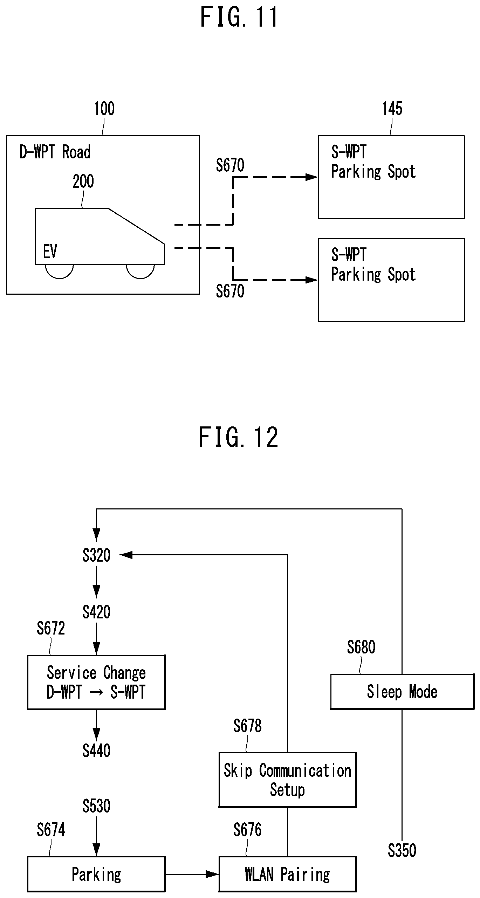

FIG. 11 is a conceptual diagram illustrating a use case according to an exemplary embodiment of the present disclosure, in which an electric vehicle having driven on the D-WPT road reaches a parking spot supporting an S-WPT service compatible with the D-WPT.

An example that an electric vehicle 200 having driven on the D-WPT road 100 reaches a parking spot 145 supporting the S-WPT service is illustrated in FIG. 11 as a use case S670.

FIG. 12 is a conceptual diagram illustrating a protocol performed when the electric vehicle reaches the parking spot in the use case of FIG. 11.

Referring to FIG. 12, according to the charging communication method for electric vehicle charging in accordance with an exemplary embodiment of the present disclosure, when at least one of the at least one SECC and/or the EVCC determines (identifies or detects) an event S670 that the electric vehicle enters a parking spot 145 providing a static wireless power transfer (S-WPT) service from a lane on the D-WPT road 100, the electric vehicle may perform a parking (S674) in the state that the charging session is stopped (S530). The charging communication method for electric vehicle charging according to an exemplary embodiment of the present disclosure may further include a protocol for performing a pairing process between the EVCC and a third SECC on the parking spot 145 (S676) through the wireless LAN after the operation S674; and performing a session setup between the EVCC and the third SECC on the parking spot 145 (S320) after the pairing process S676.

At this time, when transitioning to the session setup operation S320 after the pairing operation S676, the communication setup may be skipped (S678).

Meanwhile, when the electric vehicle leaves the D-WPT road 100, the charging session S500 may be terminated (S530), and the process may proceed from the state that the communication between the SECC and the EVCC is terminated (S350) to the communication setup and session setup operation (S320) for the S-WPT service in the parking spot 145 via a temporary state of a sleep mode S680.

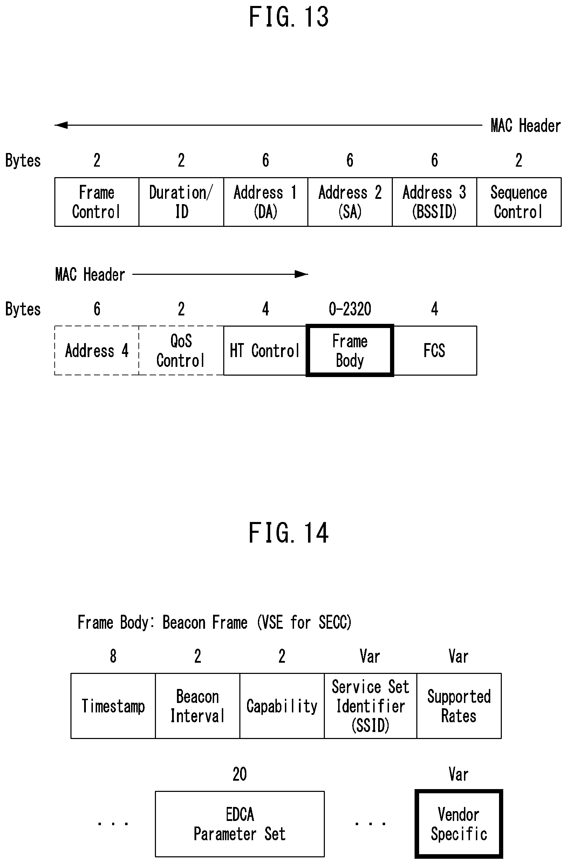

Referring to the embodiments of FIGS. 13-24, the operation of performing the charging communication session for the dynamic wireless power transfer between the SECC and the EVCC (S400, S410) may include an operation of determining the D-WPT service supported by the at least one SECC indicated by a message including D-WPT information as additional information that is a part of a vendor specific element (VSE) in a frame body.

FIG. 13 is a conceptual diagram illustrating a MAC header and a frame body in a message that may be employed in the charging communication process for the D-WPT service according to an exemplary embodiment of the present disclosure.

A message format shown in FIG. 13 begins with a MAC header. Following the MAC header, a frame body of 0-2320 bytes may be provided. Exemplary embodiments of the present disclosure may include management frames describing specific details allowing to identify the D-WPT service in the VSE within the frame body.

FIGS. 14-18 are conceptual diagrams illustrating frame bodies and VSEs in the messages that may be employed in the charging communication process for the D-WPT service according to embodiments of the present disclosure.

FIG. 14 illustrates an exemplary embodiment of the VSE for the SECC, which may be included in the frame body of a beacon frame.

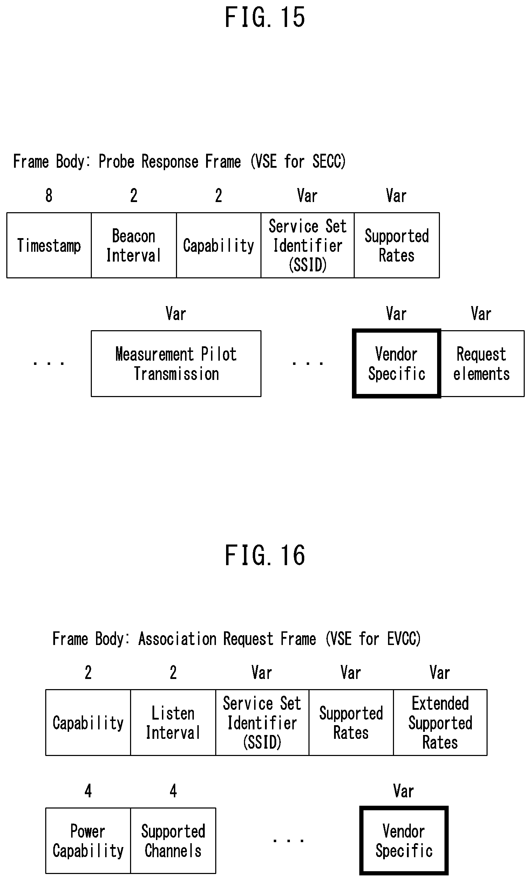

FIG. 15 illustrates an exemplary embodiment of the VSE for the SECC, which may be included in the frame body of a probe response frame.

FIG. 16 illustrates an exemplary embodiment of the VSE for the EVCC, which may be included in the frame body of an association request frame.

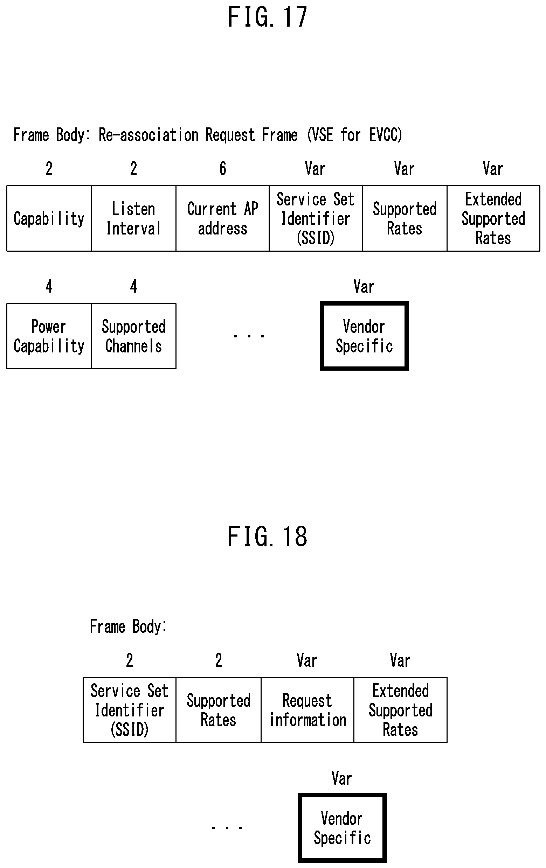

FIG. 17 illustrates an exemplary embodiment of the VSE for the EVCC, which may be included in the frame body of a re-association request frame.

FIG. 18 illustrates an exemplary embodiment of the VSE, which may be included in the frame body.

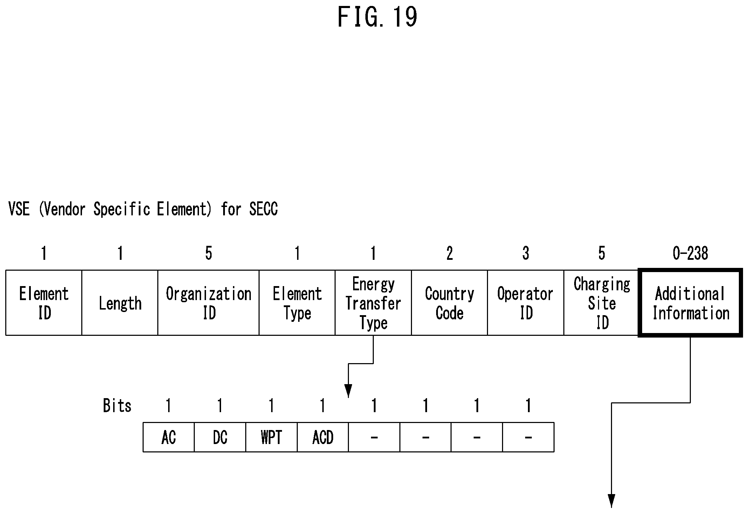

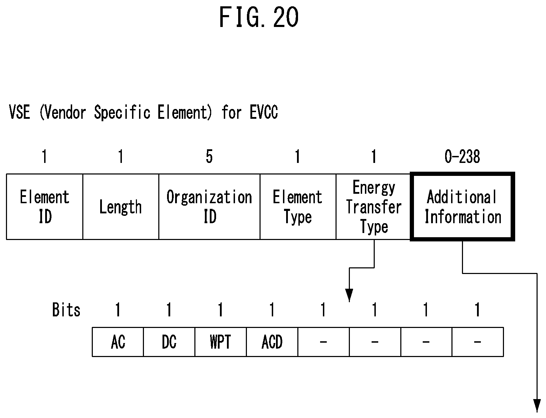

FIGS. 19 and 20 are conceptual diagrams illustrating the VSEs and the additional information within the VSEs in the messages that may be employed in the charging communication process for the D-WPT service according to an exemplary embodiment of the present disclosure.

FIG. 19 shows an example of the VSE for the SECC, which may include a lower bit for indicating the WPT in an energy transfer type (ETT) field. In addition, the VSE may further include the additional information of 0-238 bits.

FIG. 20 shows an example of the VSE for the EVCC, which may include a lower bit for indicating the WPT in an energy transfer type (ETT) field. In addition, the VSE may further include the additional information of 0-238 bits.

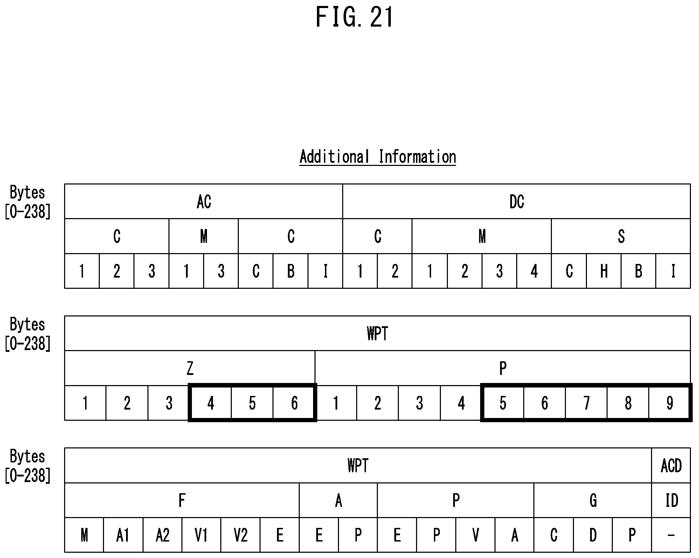

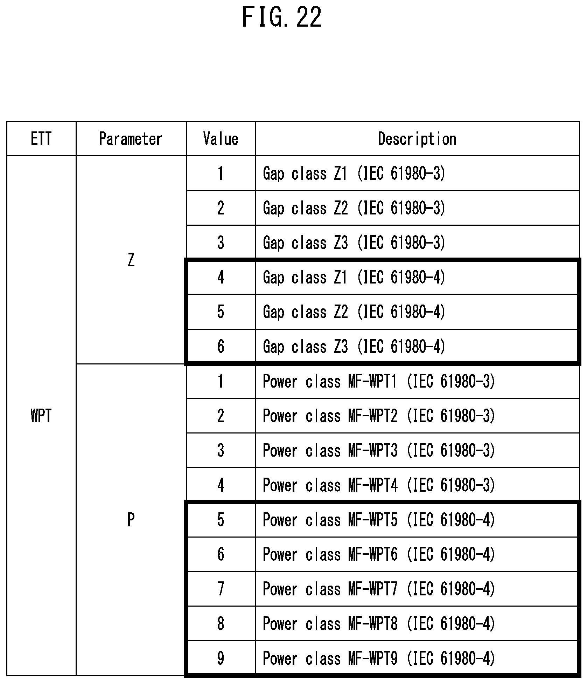

FIGS. 21 and 22 are conceptual diagrams illustrating the additional information within the VSE in the message that may be employed in the charging communication process for the D-WPT service according to an exemplary embodiment of the present disclosure.

Referring to FIG. 21, fourth through sixth data for a parameter 'Z' and fifth through ninth data for a parameter 'P' for the energy transfer type 'WPT' in the additional information may be proposed to be used as the D-WPT related information.

FIG. 22 shows an example of the WPT parameters updated to reflect the D-WPT related information shown in FIG. 21.

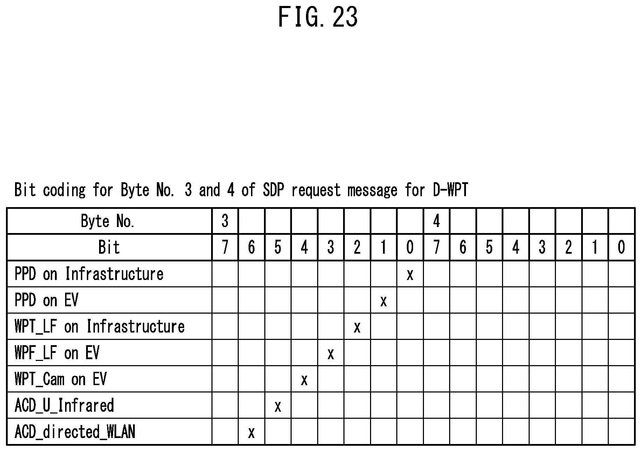

FIG. 23 is a conceptual diagram illustrating a proposed change to a service discovery protocol (SDP) request message that may be employed in the charging communication process for the D-WPT service according to an exemplary embodiment of the present disclosure;

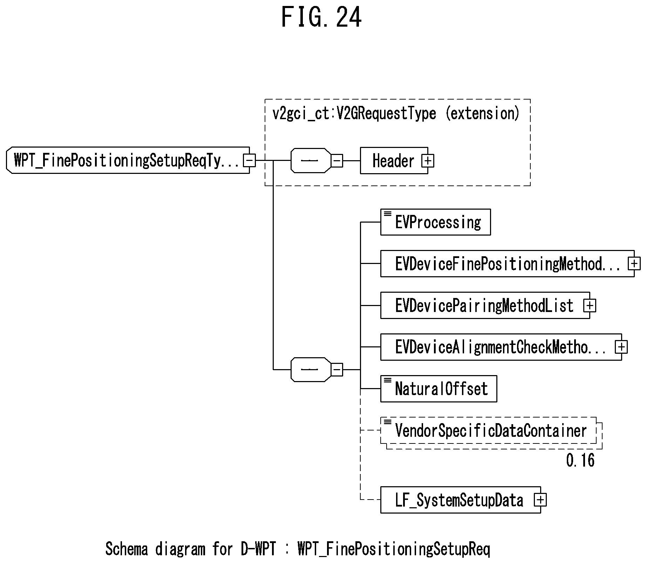

FIG. 24 is a conceptual diagram illustrating a message structure including the VSE that may be employed in the charging communication process for the D-WPT service according to an exemplary embodiment of the present disclosure.

A message structure for a fine positioning setup request sequence in the D-WPT system is shown in FIG. 24. In particular, additional information allowing to identify the D-WPT system may be added in VendorSpecificDataContainer and LF_SystemSetupData fields containing the VSE.

Exemplary embodiments of the present disclosure described above enable to provide a charging communication method and device for the dynamic wireless power transfer (D-WPT) using the wireless local area network (WLAN).

Exemplary embodiments of the present disclosure enable to provide new vendor specific element (VSE) additional information parameters representing the D-WPT and entities belonging to the D-WPT.

Exemplary embodiments of the present disclosure provide a charging procedure and use cases using the WLAN when charging an electric vehicle by the D-WPT.

Exemplary embodiments of the present disclosure enable to define information to be exchanged between the D-WPT device and the electric vehicle when the D-WPT device and the electric vehicle performs communications through the WLAN for charging the electric vehicle.

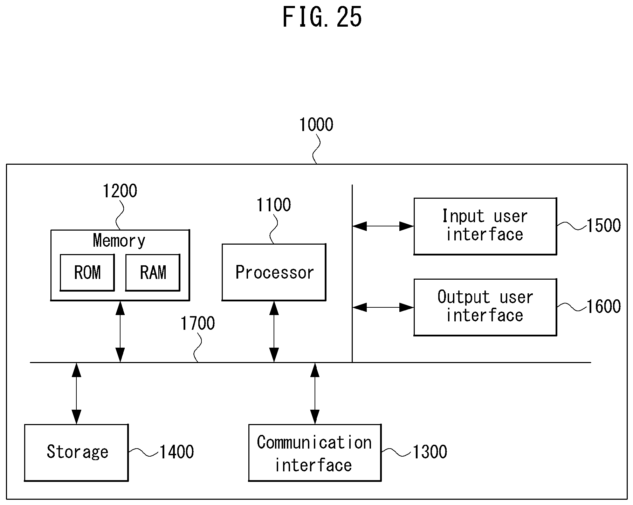

FIG. 25 is a block diagram of a charging communication device for the D-WPT according to an exemplary embodiment of the present disclosure and illustrates a physical configuration of an internal structure of a computing system suitable for implementing a generalized SECC and/or EVCC.

Although omitted in the embodiments shown in FIGS. 1-24, a processor and a memory may be electronically connected to the components of the device, and the operations of the components may be controlled or managed by the processor.

At least some of the charging communication process for charging the electric vehicle according to an exemplary embodiment of the present disclosure may be performed by the computing system 1000 of FIG. 25.

Referring to FIG. 25, the computing system 1000 according to an embodiment of the present disclosure may be configured to include a processor 1100, a memory 1200, a communication interface 1300, a storage device 1400, an input interface 1500, an output interface 1600, and a bus 1700.

The computing system 1000 according to an embodiment of the present disclosure may include at least one processor 1100 and the memory 1200 storing program instructions instructing the at least one processor 1100 to perform at least one process step. At least some of the operations or process steps of the method according to an embodiment of the present disclosure may be performed by the at least one processor 1100 loading and executing the program instructions from the memory 1200.

The processor 1100 may include a central processing unit (CPU) or a graphics processing unit (GPU) or may be implemented by another kind of dedicated processor suitable for performing the method of the present disclosure.

Each of the memory 1200 and the storage device 1400 may be comprised of at least one of a volatile storage medium and a non-volatile storage medium. For example, the memory 1200 may be comprised of at least one of a read only memory (ROM) and a random access memory (RAM).

Additionally, the computing system 1000 may include the communication interface 1300 performing communications through a wireless communication network.

Additionally, the computing system 1000 may further include the storage device 1400, the input interface 1500, and the output interface 1600.

The components of the computing system 1000 may be connected to each other by the system bus 1700 to communicate with each other.

A device including the processor 1100 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

An electric vehicle communication controller (EVCC) according to an exemplary embodiment of the present disclosure, which is mounted on an electric vehicle and associated with a secondary assembly suitable for receiving electric power from a primary assembly, may include a processor 1100 configured to receive at least one instruction from a memory and execute the at least one instruction.

The processor 1100 may be configured, by executing the at least one instruction, to: perform a communication setup and a session setup for a wireless power transfer with the at least one SECC; perform a charging communication session for a dynamic wireless power transfer (D-WPT) between the at least one SECC and the EVCC; and perform a charging session by the dynamic wireless power transfer between the at least one SECC and the EVCC.

The processor 1100 may be further configured, by executing the at least one instruction, to: perform the communication setup and the session setup for the wireless power transfer between the EVCC and the at least one SECC capable of communicating with the EVCC via a wireless LAN (WLAN).

The processor 1100 may be further configured, by executing the at least one instruction, to: determine (identify or detect), between the EVCC and a first SECC from among the at least one SECC capable of communicating with the EVCC via the WLAN, whether the first SECC capable of communicating with the EVCC via the WLAN is a SECC installed on a D-WPT road and capable of providing a D-WPT service.

The processor 1100 may be further configured, by executing the at least one instruction, to: stop the charging session and enter a standby state when an event that the electric vehicle changed lanes from a lane on a D-WPT road to a non-D-WPT road is determined (identified or detected).

The processor 1100 may be further configured, by executing the at least one instruction, to: when it is determined in the standby state by at least one of the at least one SECC and/or the EVCC that the electric vehicle returned to a lane on the D-WPT road, perform again the session setup between the EVCC and at least one SECC on the D-WPT road to which the electric vehicle returned (SECC associated with at least one lane on the D-WPT road).

The processor 1100 may be further configured, by executing the at least one instruction, to: when it is determined based on results of a positioning and a pairing that the electric vehicle changed lanes from a first lane on a D-WPT road to a second lane on the D-WPT road, determine whether the second lane after a change provide a same service as the first lane before the change and whether the second lane after the change has a same compatibility level as the first lane before the change.

The processor 1100 may be further configured, by executing the at least one instruction, to: perform at least one of (a1) a session setup, (a2) a service discovery and selection, and/or (a3) a parameter exchange with a second SECC related to (or associated with) a second lane after a lane change based on whether (b1) the second lane after the lane change provides a same service as a first lane or a first SECC associated with the first lane before the change or not and/or (b2) whether the second lane after the change has a same compatibility level as the first SECC or the first lane before the change or not.

The processor 1100 may be further configured, by executing the at least one instruction, to: determine a D-WPT service supported by the at least one SECC indicated based on a message including D-WPT information as additional information that is a part of a vendor specific element (VSE) in a frame body.

The method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

### INDUSTRIAL APPLICABILITY

Exemplary embodiments of the present disclosure enable to provide a charging communication method and device for the dynamic wireless power transfer (D-WPT) using the wireless local area network (WLAN).

Exemplary embodiments of the present disclosure enable to provide new vendor specific element (VSE) additional information parameters representing the D-WPT and entities belonging to the D-WPT.

Exemplary embodiments of the present disclosure provide a charging procedure and use cases using the WLAN when charging an electric vehicle by the D-WPT.

Exemplary embodiments of the present disclosure enable to define information to be exchanged between the D-WPT device and the electric vehicle when the D-WPT device and the electric vehicle performs communications through the WLAN for charging the electric vehicle.

## Claims

1. A charging communication method for charging an electric vehicle and performed between a supply equipment communication controller (SECC) associated with a primary assembly configured to transmit electric power to the electric vehicle and an electric vehicle communication controller (EVCC) associated with a secondary assembly mounted on the electric vehicle and configured to receive the electric power from the primary assembly, the charging communication method comprising:
performing a communication setup and a session setup for a wireless power transfer between the EVCC and at least one SECC;
performing a charging communication session for a dynamic wireless power transfer (D-WPT) between the EVCC and the at least one SECC; and
performing a charging session by the dynamic wireless power transfer between the EVCC and the at least one SECC.

2. The charging communication method of claim 1, wherein the communication setup and the session setup for the wireless power transfer is performed between the EVCC and the at least one SECC capable of communicating with the EVCC via a wireless LAN (WLAN).

3. The charging communication method of claim 1, wherein performing the charging communication session for the dynamic wireless power transfer comprises:
determining, by at least one of the EVCC or a first SECC from among the at least one SECC capable of communicating with the EVCC via the WLAN, whether the first SECC capable of communicating with the EVCC via the WLAN is installed on a D-WPT road and capable of providing a D-WPT service.

4. The charging communication method of claim 1, further comprising:
stopping the charging session based on a state of charge (SOC) of the electric vehicle reaching a predetermined reference value through the dynamic wireless power transfer between the at least one SECC and the EVCC.

5. The charging communication method of claim 1, further comprising: stopping the charging session and entering a standby state based on a determination of the electric vehicle changing of lanes from a first lane on a D-WPT road to a second lane on a non-D-WPT road, wherein the changing of lanes is determined by at least one of the EVCC or a first SECC associated with the first lane.

6. The charging communication method of claim 5, further comprising:
stopping the charging communication session and terminating a communication between the first SECC and the EVCC based on a determination of the electric vehicle moving out of a WLAN range, in the standby state, wherein the moving out of the WLAN range is determined by at least one of the EVCC or the first SECC.

7. The charging communication method of claim 5, further comprising:
performing again the session setup between the EVCC and the first SECC on the D-WPT road to which the electric vehicle returned based on a determination of the electric vehicle returning to the first lane on the D-WPT road, in the standby state, wherein the returning to the first lane on the D-WPT road is determined by at least one of the EVCC or the first SECC.

8. The charging communication method of claim 1, wherein, in performing the charging communication session, a compatibility check and a parameter exchange are performed again based on a determination of the electric vehicle changing lanes from a first lane on a D-WPT road to a second lane on the D-WPT road providing a same service, wherein the changing of lanes is determined by at least one of the EVCC or the at least one SECC, based on results of a positioning and a pairing.

9. The charging communication method of claim 1, wherein, in performing the charging communication session, a service discovery and a service selection are performed again between the EVCC and a second SECC based on a determination of the electric vehicle changing lanes from a first lane associated with a first SECC on a first D-WPT road to a second lane associated with the second SECC on a second D-WPT road providing a different service from the first SECC, wherein the changing of lanes is determined by at least one of the EVCC, the first SECC, or the second SECC, based on results of a positioning and a pairing.

10. The charging communication method of claim 1, wherein, stopping the charging session and performing again the communication setup and the session setup for the wireless power transfer between the EVCC and a second SECC related to a second lane based on a determination of the electric vehicle changing lanes from a first lane associated with a first SECC on a first D-WPT road to the second lane on a second D-WPT road providing a different service from the first SECC requiring a new compatibility check or a new parameter exchange, wherein the changing of lanes is determined by at least one of the EVCC, the first SECC, or the second SECC.

11. The charging communication method of claim 1, further comprising:
stopping the charging session and performing a pairing process between the EVCC and a third SECC on a parking spot through a WLAN based on a determination of the electric vehicle entering the parking spot providing a static wireless power transfer (S-WPT) from a lane on the D-WPT road; and
performing a session setup between the EVCC and the third SECC on the parking spot after the pairing process.

12. The charging communication method of claim 1, wherein the performing the charging communication session for the D-WPT between the EVCC and the at least one SECC comprises:
determining a D-WPT service supported by the at least one SECC indicated based on a message including D-WPT information as additional information that is a part of a vendor specific element (VSE) in a frame body.

13. An electric vehicle communication controller (EVCC) mounted on an electric vehicle and associated with a secondary assembly suitable for receiving electric power from a primary assembly, comprising:
a processor configured to receive at least one instruction from a memory and execute the at least one instruction,
wherein the processor is configured, by executing the at least one instruction, to:
perform a communication setup and a session setup for a wireless power transfer with at least one SECC;
perform a charging communication session for a dynamic wireless power transfer (D-WPT) between the EVCC and the at least one SECC; and
perform a charging session by the dynamic wireless power transfer between the EVCC and the at least one SECC.

14. The electric vehicle communication controller (EVCC) as claimed in claim 13, wherein the processor is further configured, by executing the at least one instruction, to:
perform the communication setup and the session setup for the wireless power transfer between the EVCC and the at least one SECC capable of communicating with the EVCC via a wireless LAN (WLAN).

15. The electric vehicle communication controller (EVCC) as claimed in claim 13, wherein the processor is further configured, by executing the at least one instruction, to:
determine, between the EVCC and a first SECC from among the at least one SECC capable of communicating with the EVCC via the WLAN, whether the first SECC capable of communicating with the EVCC via the WLAN is installed on a D-WPT road and capable of providing a D-WPT service.

16. The electric vehicle communication controller (EVCC) as claimed in claim 13, wherein the processor is further configured, by executing the at least one instruction, to:
stop the charging session and enter a standby state based on a determination of the electric vehicle changing lanes from at least one first lane on a D-WPT road to a second lane on a non-D-WPT road.

17. The electric vehicle communication controller (EVCC) as claimed in claim 16, wherein the processor is further configured, by executing the at least one instruction, to:
perform again the session setup between the EVCC and a first SECC associated with the at least one first lane on the D-WPT road to which the electric vehicle returned based on a determination of the electric vehicle returning to the D-WPT road, in the standby state, wherein the returning to the D-WPT road is determined by at least one of the EVCC or the first SECC.

18. The electric vehicle communication controller (EVCC) as claimed in claim 13, wherein the processor is further configured, by executing the at least one instruction, to:
determine whether a second lane provides a same service as a first lane and whether the second lane has a same compatibility level as the first lane based on a determination of the electric vehicle changing lanes from the first lane on a D-WPT road to the second lane on the D-WPT road, based on results of a positioning and a pairing.

19. The electric vehicle communication controller (EVCC) as claimed in claim 13, wherein the processor is further configured, by executing the at least one instruction, to:
perform at least one of a session setup, a service discovery and selection, or a parameter exchange with the at least one SECC associated with a second lane based on whether the second lane provides a same service as a first lane or whether the second lane has a same compatibility level as the first lane based on a determination of the electric vehicle changing lanes from the first lane to the second lane.

20. The electric vehicle communication controller as claimed in claim 13, wherein the processor is further configured, by executing the at least one instruction, to:
determine a D-WPT service supported by the at least one SECC indicated based on a message including D-WPT information as additional information that is a part of a vendor specific element (VSE) in a frame body.
